# EUROPÄISCHE PATENTANMELDUNG

(11) **EP 1 284 553 A2**
(43) Veröffentlichungstag der Anmeldung: **19.02.2003**
(21) Anmeldenummer: 02102134.0
(22) Anmeldetag: 14.08.2002
(51) Int. Cl.: H04L 12/28, H04L 29/06

(54) **Verfahren zur Behandlung von Nutzungskonflikten in digitalen Netzwerken**

(30) Priorität: 16.08.2001 DE 10140149
(71) Anmelder: Philips Corporate Intellectual Property GmbH, 20099 Hamburg (DE); Koninklijke Philips Electronics N.V., 5621 BA Eindhoven (NL)
(72) Erfinder: Montvay, Andras, 52088, Aachen (DE); Baldus, Heribert, 52088, Aachen (DE); Baumeister, Markus, 52088, Aachen (DE)
(74) Vertreter: Volmer, Georg, Dipl.-Ing.

(57) **Zusammenfassung**

Die Erfindung betrifft ein Verfahren zur Behandlung von Nutzungskonflikten in digitalen Netzwerken, insbesondere in digitalen Hausnetzwerken. Ein derartiger Konflikt liegt vor, wenn eine zweite Applikation (2) aufgrund einer zweiten Zielvorgabe auf eine Ressource zugreifen möchte, welche von einer ersten Applikation (2') aufgrund einer ersten Zielvorgabe bereits belegt ist. Bei dem Verfahren wird in einem solchen Falle nach Änderungen der konkreten Anforderungen der Netzwerkkomponente gesucht, welche das Erreichen der ersten Zielvorgabe und der zweiten Zielvorgabe gleichzeitig erlauben. Wenn zum Beispiel die erste Zielvorgabe das Bereitstellen von Sportnachrichten ist und zu diesem Zweck die erste Anforderung zu einer bestimmten Uhrzeit Sportnachrichten auf einem Videorecorder aufzeichnen möchte, und wenn zu dieser Zeit eine zweite Applikation den Videorecorder anfordert, so kann dieser Konflikt gegebenenfalls dadurch gelöst werden, dass unter Lösung der ersten Zielvorgabe zu einem späteren Zeitpunkt eine andere Sendung mit Sportnachrichten aufgezeichnet wird. Das heißt, dass die konkrete Anforderung der Resource "Videorecorder" durch eine zeitliche Verschiebung geändert wird, wobei die grundlegende Zielvorgabe jedoch gleich bleibt.

## Beschreibung

### Verfahren zur Behandlung von Nutzungskonflikten in digitalen Netzwerken

Die Erfindung betrifft ein Verfahren zur Behandlung von Nutzungskonflikten in digitalen Netzwerken, vorzugsweise in digitalen Hausnetzwerken, wobei eine von einer ersten Applikation aufgrund einer ersten Zielvorgabe belegte Ressource von einer zweiten Applikation aufgrund einer zweiten Zielvorgabe angefordert wird. Ferner betrifft die Erfindung ein digitales Netzwerk, insbesondere ein digitales Hausnetzwerk, in welchem ein derartiges Verfahren implementiert ist.

Die Verarbeitung von Informationen unterliegt einer zunehmenden Digitalisierung und Vernetzung von Verarbeitungsmedien. Soweit hiervon der Wohnungsbereich betroffen ist, werden die zugehörigen Netzwerke als digitale Hausnetzwerke (IHDN: In-Home Digital Network) bezeichnet. In einem solchen IHDN können Fernsehen, Radio, Monitore, Lautsprecher, Kameras, Drucker, Scanner, PCs, Telefondienste, eine Spracherkennung, Hausgerätesteuerungen, Sicherheitseinrichtungen und dergleichen integriert sein. Insbesondere bei den Audio- und Videomedien mit ihren hohen Datenraten von typischerweise 100 Mbit/s kommt es dabei jedoch häufig zu Nutzungskonflikten, wenn verschiedene Applikationen um Ressourcen (sowohl Geräte- als auch Netzwerkressourcen) konkurrieren.

Im Stand der Technik sind zwar bereits eine Reihe von Ressourcenverwaltungen in Netzwerken bekannt. Diese gehen jedoch immer von zumindest einigen der folgenden Voraussetzungen aus:
- Eine Anforderung wird als durch ihre expliziten Parameter vollständig beschrieben betrachtet. Das heißt, es wird vorausgesetzt, dass es keine zusätzlichen, zunächst nicht berücksichtigten Informationen an anderer Stelle im System gibt, die für die Bewertung der Anforderung eine Rolle spielen.
- Wenn es überhaupt eine Verhandlung um z.B. die Dienstgüte gibt, so findet diese zwischen einer Applikation und der verwaltenden Einheit statt, nicht jedoch auf Ebene der Benutzer.
- Die Anforderung wird als eindeutig angenommen in dem Sinne, dass zwar u.U. eine Reduktion entlang einer bestimmten Parameterachse Sinn macht, nicht jedoch die grundlegende Änderung der Anforderung zu völlig anderen Parameterwerten.
- Die Reduktion einer Anforderung bedarf der expliziten Zustimmung der anfordernden Stelle, es besteht kein anderweitiges "Wissen" um die Präferenzen und Akzeptanz bezüglich bestimmter Parameter.
- Die Alternativangebote im Lauf einer Verhandlung werden nicht mit Hilfe zusätzlicher Informationen auf die Applikation abgestimmt, sondern sind lediglich generisch aus den verfügbaren Ressourcen abgeleitet.
- Eine Anforderung kann auch komplett und ohne Alternativangebot abgelehnt werden.
- Neu eingehende Anforderungen werden für sich genommen betrachtet, es wird also nicht für alte Anforderungen neu verhandelt (keine Präemption, allenfalls durch komplettes Löschen einer alten Anforderung).

Hinsichtlich einiger konkreter Beispiele von Ressourcenverwaltungen gilt Folgendes:
- Die Ressourcenverwaltung in HAVi 1.0 erlaubt zwar Präemption (sogar durch Nachfrage beim Benutzer), diese bezieht sich jedoch auf die komplette Freigabe eines belegten Gerätes, d.h. die alte Anforderung wird komplett überschrieben. Keine der vorhandenen Anforderungen wird auf Alternativen geprüft, der Benutzer erhält keine echte Hilfestellung.
- Prozessor-Scheduling Mechanismen in Betriebssystemen und die Internet-Differentiated Services Architektur gehen jeweils von Prioritäten von Anforderungen aus, die zu einer (mehr oder weniger) gerechten Verteilung der knappen Ressource führen sollen. Hier werden jedoch keinerlei Reservierungen im Sinne einer festen Zusage geleistet.
- Die Internet-Integrated Services Architektur (Ressource Reservation Protocol -RSVP) lehnt nicht erfüllbare Anforderungen schlicht ab.

Vor diesem Hintergrund war es eine Aufgabe der vorliegenden Erfindung, ein Verfahren und eine Vorrichtung bereitzustellen, mit denen flexibel und effizient Nutzungskonflikte in digitalen Netzwerken, insbesondere in digitalen Hausnetzwerken gelöst werden können.

Diese Aufgabe wird durch ein Verfahren mit den Merkmalen des Anspruchs 1 sowie durch ein digitales Netzwerk mit den Merkmalen des Anspruchs 10 gelöst. Vorteilhafte Ausgestaltungen sind in den Unteransprüchen enthalten.

Das vorgeschlagene Verfahren dient der Behandlung von Nutzungskonflikten in digitalen Netzwerken wie insbesondere digitalen Hausnetzwerken, wobei dem Konflikt die Situation zugrunde liegt, dass eine erste Applikation aufgrund einer ersten Zielvorgabe eine Ressource belegt hat und währenddessen dieselbe Ressource von einer zweiten Applikation aufgrund einer zweiten Zielvorgabe angefordert wird Im Rahmen des Verfahrens werden dann Änderungen der Anforderung der Ressource durch die erste Applikation und/oder der Anforderung der Ressource durch die zweite Applikation gesucht, wobei die gesuchten Änderungen sowohl das Erreichen der ersten Zielvorgabe als auch gleichzeitig das Erreichen der zweiten Zielvorgabe erlauben sollen.

Bei dem vorgeschlagenen Verfahren wird somit zwischen der konkreten Anforderung der Ressource und einer dahinter stehenden Zielvorgabe unterschieden. Dies erlaubt es, den Nutzungskonflikt aufzulösen durch Änderungen der Anforderungen bei gleichzeitiger Erfüllung der Zielvorgaben, welche das für den Benutzer des Netzwerkes eigentlich relevante Kriterium darstellen. Die Trennung zwischen der konkreten Anforderung einer konkreten Ressource und einer zugrundeliegenden abstrakteren Zielvorgabe bietet eine große Flexibilität bei der Suche nach Lösungen. Ferner ist von Bedeutung, dass sowohl Änderungen an der Anforderung der späteren, zweiten Applikation als auch der Anforderung der früheren, ersten Applikation gesucht werden. Anders als bei vielen anderen Verfahren ist somit die erste Applikation nicht tabu, was eine entsprechende größere Anzahl von Lösungsmöglichkeiten eröffnet.

Für die Art und Weise, wie die Anforderung einer Ressource konkret geändert wird, gibt es zahlreiche Möglichkeiten. Insbesondere kann die Änderung in einer vollständigen oder teilweisen zeitlichen Verschiebung der Anforderung, in einer Veränderung der Zugriffsparameter wie insbesondere der Bandbreite und/oder Datenrate des Zugriffs und/oder in einem Wechsel auf eine andere, gleichwertige Ressource bestehen. Ferner kann die Anforderung einer Ressource auch grundlegend umstrukturiert werden, z.B. durch einen Wechsel auf eine als Zwischenstation dienende Ressource.

Die hinter den jeweiligen Anforderungen stehenden Zielvorgaben können insbesondere durch einen Datenflussgrafen repräsentiert werden, welcher vorzugsweise Informationen über die angeforderten Daten und das gewünschte Ziel dieser Daten enthält. Die angeforderten Daten können zum Beispiel bestimmte Sportnachrichten, ein bestimmter Spielfilm, ein bestimmtes Musikstück oder dergleichen sein. Das gewünschte Ziel dieser Daten kann zum Beispiel durch die Darstellungsart (Audio/Video) und Darstellungsparameter (Bildgröße, Auflösung, Lautstärke etc.) definiert werden.

Gemäß einer Weiterbildung des Verfahrens werden bei der Suche nach Änderungen der Anforderungen der Ressource Benutzerprofile berücksichtigt. Hierbei kann es sich um bekannte und explizit zur Verfügung gestellte Daten betreffend die Benutzer des Netzwerkes handeln Ebenso ist es jedoch auch möglich, dass Daten des Benutzerprofils adaptiv durch Beobachtung des Benutzerverhaltens erworben werden. So kann beispielsweise ermittelt werden, welche Präferenzen ein bestimmter Nutzer für die im Netzwerk verfügbaren Dienste hat, z.B. ob er häufig das Internet nutzt oder bestimmte Fernsehsendungen verfolgt. Weiterhin können zum Benutzerprofil auch Daten aus dem Terminkalender des Benutzers gehören, die es insbesondere erlauben, über die zeitliche Verschiebung von Ressourcenzugriffen zu entscheiden.

Ferner findet bei der Suche nach einer Lösung der Netzwerkkonflikte vorzugsweise eine Interaktion mit dem Benutzer oder den Benutzern des Netzwerks statt. Hierzu können vom Benutzer gegebenenfalls zusätzliche Informationen erfragt werden, welche nicht ohnehin im System vorhanden sind. Ferner kann zu einem gefundenen Änderungsvorschlag für den Ressourcenzugriff die Zustimmung des Benutzers eingeholt werden, bevor die ermittelte Änderung ausgeführt wird Besteht zum Beispiel die vorgeschlagene Änderung in einer Verringerung der Bandbreite eines Videozugriffes, so soll dem Benutzer eine Zustimmungsmöglichkeit gegeben werden, da dieser unter Umständen mit der resultierenden Verschlechterung der Bildqualität nicht einverstanden ist.

Gemäß einer anderen Weiterbildung des Verfahrens wird für eine gefundene Konfliktlösung auch eine Reihenfolge ermittelt, in welcher die vorgeschlagenen Änderungen vorteilhafterweise durchgeführt werden. Durch die Vorgabe einer derartigen Reihenfolge wird vermieden, dass die Applikationen ungeregelt eine Änderung des Zugriffs vornehmen, was zum Beispiel zu einer gegenseitigen Blockierung der Zugriffe oder zu einer unerwünschten Unterbrechung einer der Applikationen führen könnte.

Ferner kann die Änderung mindestens einer der Zielvorgaben vorgeschlagen werden, falls keine geeigneten Änderungen der konkreten Anforderungen der begrenzten Ressource bei gleichbleibenden Zielvorgaben gefunden wurden. Der Vorschlag für die Änderung der Zielvorgabe kann dabei wiederum vorhandene oder erlernte Informationen, insbesondere Benutzerprofile verwenden. So könnte beispielsweise die Aufzeichnung einer vergleichbaren Nachrichtensendung vorgeschlagen werden, falls die ursprünglich gewünschte Nachrichtensendung aufgrund des Ressourcenkonfliktes nicht aufgezeichnet werden kann. Auch der oben erwähnte Vorschlag des Systems, eine Audio- oder Videoübertragung mit geringerer Bandbreite vorzunehmen, kann ein Bespiel für eine Änderung der zugrunde liegenden Zielvorgabe sein, wenn die Qualität der Übertragung ein Bestandteil der ursprünglichen Zielvorgabe war.

Darüber hinaus können auch Vorschläge für eine Änderung bzw. Erweiterung des Netzwerkes und/oder seiner Ressourcen erstellt werden, um zukünftige Nutzungskonflikte zu minimieren. Derartige Vorschläge können zum Beispiel darauf basieren, dass wiederholt bestimmte Arten von Nutzungskonflikten beobachtet werden, die sich durch Hinzufügung einer weiteren Ressource oder durch Umstrukturierung des Netzwerkes vermeiden ließen.

Des weiteren kann das Verfahren dahingehend weitergebildet werden, dass eine vorausschauende Behandlung von Nutzungskonflikten durchgeführt wird. Insbesondere kann dabei die Anforderung der Ressource durch die zweite Applikation eine nur vorhergesagte Anforderung sein, wobei die Vorhersage zum Beispiel auf erlernten Benutzerprofilen beruht. In diesem Falle kann beim Ausführen der ersten Anforderung der Ressource bereits die zu erwartende spätere Konfliktsituation durch die zweite Anforderung der zweiten Applikation berücksichtigt und möglichst von vornherein gelöst beziehungsweise vermieden werden.

Die Erfindung betrifft ferner ein digitales Netzwerk, insbesondere ein digitales Hausnetzwerk, welches mindestens eine Datenverarbeitungseinheit enthält, auf welcher eine Implementation von Applikationen, von einer Ressourcenverwaltung, und von einem Mediatormodul abläuft, wobei das Mediatormodul so eingerichtet ist, dass es ein Verfahren der oben erläuterten Art ausführen kann Ferner enthält das Netzwerk eine Datenbank, welche mit der Datenverarbeitungseinheit gekoppelt ist und vorzugsweise Informationen über die Topologie, die Ressourcen und die Anbindung des Netzwerkes, über Datenbestände im Netzwerk und Angebote von Service-Providern beziehungsweise Broadcastern, über vorgegebene und/oder gelernte Benutzerprofile sowie Benutzerdaten enthält. Schließlich weist das Netzwerk noch mindestens eine Benutzerschnittstelle auf, welche mit der Datenverarbeitungseinheit gekoppelt ist und die Kommunikation mit einem Benutzer ermöglicht.

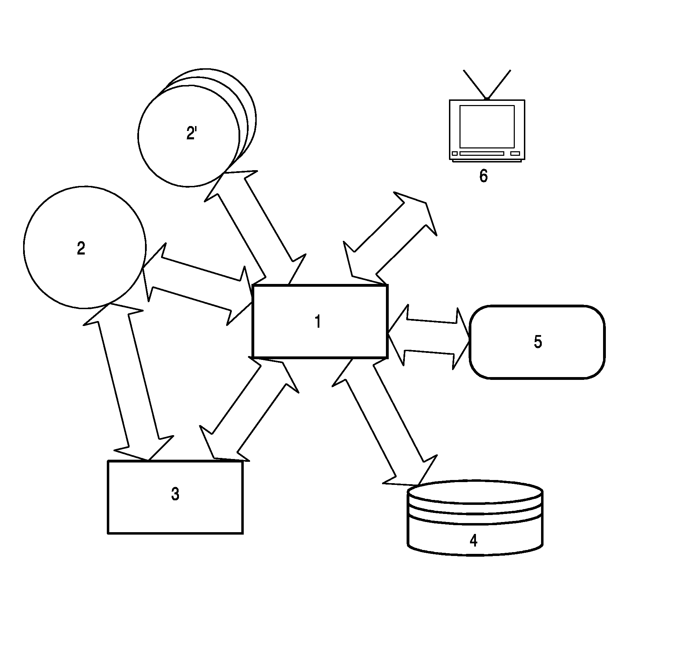

Im Folgenden wird die Erfindung anhand eines Beispiels unter Bezugnahme auf die beigefügte Figur erläutert.

Die einzige Figur zeigt schematisch die Komponenten eines erfindungsgemäßen Hausnetzwerkes.

In einem digitalen Hausnetzwerk (IHDN), wie es in der Figur beispielhaft dargestellt ist, konkurrieren verschiedene Applikationen um Ressourcen (sowohl Geräte als auch Netzwerkressourcen). Eine Anforderung eines Benutzers, eine bestimmte Aktion durchzuführen, kann u.U. nicht mit den bestehenden Ressourcen erfüllt werden. Anstatt dem Benutzer lediglich die Ablehnung mitzuteilen, soll das System Vorschläge machen, wie durch Abwandlung dieser und anderer, bereits bestehender Anforderungen eine Kompromisslösung gefunden werden kann, und diese dann ausführen. Die Motivation für diese Art der Unterstützung für den Benutzer besteht in der gestiegenen Komplexität eines IHDN im Vergleich mit analogen A/V Anlagen oder auch im Vergleich mit einem einzelnen PC. Im Gegensatz zu diesen Systemen können die Zusammenhänge von Applikationen und Ressourcen dem Benutzer unklar sein, so dass er nicht selbst zu einer Lösung kommen kann. Ein Beispiel aus dem analogen A/V Bereich: wenn der Videorecorder VCR gerade etwas aufnimmt, und der Benutzer möchte eine andere Aufnahme betrachten, ist der Ressourcenkonflikt um das VCR-Laufwerk offensichtlich und vom Benutzer durch Kompromiss (zeitliche Verschiebung oder Verzicht) lösbar. Im IHDN kann ein ähnlicher Konflikt wesentlich subtiler und für den Benutzer unverständlich sein. So kann es z.B. passieren, dass die unterschiedliche Datenrate, die sich bei der Mpeg-Codierung von mehr oder weniger "actionreichen" Videosequenzen ergibt, einen Einfluss darauf hat, ob die gleichzeitige Aufnahme zweier Ströme möglich ist oder nicht. Auch die Lösungsmöglichkeiten sind wesentlich komplexer, z.B. eine Umcodierung zur Reduzierung der Videobandbreite.

Zudem lässt die Vernetzung aller Geräte eines Hauses auch die Anwendungen aller Hausbewohner direkt miteinander um Ressourcen (z.B. Netzwerklast) konkurrieren. Während früher nur Applikationen in Konflikt traten, die auf dem gleichen Gerät laufen sollten (z.B. Aufnahme und Wiedergabe von Videos), können nun Konflikte zwischen völlig verschiedenen Applikationen (z.B. Web-Download vs. Videoaufnahme) auftreten, so dass die Häufigkeit von Konflikten zwischen Anforderungen verschiedener Benutzer stark zunimmt. Hier benötigt u.U. ein Benutzer allein deshalb Unterstützung vom IHDN, weil der andere Benutzer, dessen Anforderung mit der eigenen konkurriert, gar nicht anwesend ist, so dass das System beratend tätig werden muss. Ideal wäre beispielsweise eine Lösung die am Terminkalender des Abwesenden erkennt, dass dieser ohnehin erst am nächsten Tag das Video ansehen kann, das gerade aus dem Web heruntergeladen wird, und daraufhin eine Verschiebung des Downloads um einige Stunden vorschlägt. Die Zielsetzung des erfindungsgemäßen Systems ist es somit, niemals eine Anforderung eines Benutzers pauschal abzulehnen, sondern solange nach möglichen Alternativen zu suchen, bis eine für alle Benutzer akzeptable Lösung gefunden wurde.

Diese Zielsetzung wird durch ein Netzwerk mit einem sogenannten Mediatorsystem gelöst, welches gemäß der Figur die folgenden Komponenten enthält:
- eine Ressourcenverwaltung 3 zur Verwaltung der vorhandenen Ressourcen (Busleitungen, Netzwerkknoten, Datenverarbeitungseinheiten, Ein-/Ausgabegeräte, Telefondienste etc.);
- einen Mediator 1;
- eine Datenbank 4 mit Content-Alternativen, mit einem Applikationskatalog, mit Benutzerpräferenzen und -informationen etc.;
- eine Benutzerschnittstelle 6 zum Austausch von Informationen mit einem Benutzer;
- einen zentralen Mediationsalgorithmus 5, welcher vorzugsweise heuristisch und gegebenenfalls unter Verwendung von Methoden der künstlichen Intelligenz (KI) erstellt ist;
- diverse Applikationen 2, 2'.

Die genannten und in der Figur dargestellten Komponenten sind zumindest logisch vorhanden, können dabei jedoch zu mehreren in einer konkreten Implementierung zusammengefasst sein.

Das Mediatorsystem kann als Software auf einem bestehenden, auch anderweitig verwendeten Gerät residieren (STB, evtl. PC), das dann aber kontinuierlich verfügbar sein muss, oder als einzelnes Gerät ins Netzwerk eingebunden werden. Im letzteren Fall wird es möglicherweise die Datenbank 4 auf einem anderen Gerät abspeichern (Home Archive o.ä).

Der funktionale Ablauf einer Mediation ist wie folgt:
- Die Applikation 2 stellt bei der Ressourcenverwaltung 3 eine Anforderung, die jedoch nicht erfüllt werden kann. Daraufhin wendet sich die Applikation 2 an den Mediator 1. Dabei gibt sie dem Mediator 1 nicht nur die konkrete Ressourcenanforderung an, sondern auch eine generelle Beschreibung der zugrundeliegenden Zielvorgabe in Form eines angestrebten Datenflussgrafen (d.h. einer Datenstruktur, die z.B. beschreibt, dass eine Quelle mit dem Content "CNN" verbunden wird mit einer Senke (Anzeige) mit angegebenen Eigenschaften wie Ort, Größe, Videoqualität etc.).
- Der Mediator 1 holt von Ressourcenverwaltung 3, anderen betroffenen Applikationen 2', der Datenbank 4 und der Benutzerschnittstelle 6 weitere Informationen zum bestehenden Konflikt ein. Z.B. holt er von der Ressourcenverwaltung 3 die Information ein, von welcher Applikation die angefragte Ressource derzeit belegt wird, von dieser Applikation den Datenflussgrafen, der mit Hilfe dieser Ressource derzeit realisiert wird, von der Datenbank 4 das Benutzerprofil beider betroffenen Benutzer und von der Benutzerschnittstelle 6 den Wert einer im Profil noch nicht gesetzten Einstellung Diese Informationen gibt der Mediator 1 dann an den Mediationsalgorithmus 5.
- Der Mediationsalgorithmus 5 versucht zu einer Alternativlösung zu kommen. Dazu kann er vom Mediator 1 ggf. weitere Informationen abrufen, die zunächst nicht mitgäliefert wurden, und die dieser wiederum von den o.g. anderen Entitäten abfragen kann. Dies wird vorzugsweise mit Hilfe einer allgemein definierten Beschreibungssprache für die Abfrage von Informationen implementiert. Insbesondere ist eine der möglichen Rückfragen an den Mediator 1 die nach der Benutzerakzeptanz für eine vorgeschlagene Lösung die mittels der Benutzerschnittstelle 6 geprüft wird
- Findet der Mediationsalgorithmus 5 eine Lösung die alle gestellten Forderungen erfüllt, so teilt er diese dem Mediator 1 mit. Diese Mitteilung geschieht z.B. in Form von Datenflussgrafen für jede betroffene Applikation, wobei die allgemeinen Anforderungen gemäß "Quelle mit Content CNN" aber durch konkret benannte Ressourcen ersetzt sind Es wird dabei auch angegeben, in welcher Reihenfolge die Applikationen 2, 2' von den momentan genutzten Ressourcen auf neue Ressourcen umsteigen können (Migrationspfad), ohne eine Blockade zu erzeugen (bei einer Blockade soll Applikation 2 laut der Lösung Ressource A bekommen, versucht dies aber, bevor die Ressource gemäß der Lösung von Applikation 2' freigegeben wurde). Wenn es keinen einfachen Migrationspfad gibt, kann der Algorithmus auch einen "Umweg" angeben, d.h. so etwas wie "Applikation 2 muss zunächst kurz alle Ressourcen freigeben, da sonst eine zirkuläre Abhängigkeit zwischen mehreren Applikationen besteht". Die Notwendigkeit solcher Umwege bei der Migration muss natürlich vom Algorithmus bei der Bewertung einer Lösung ggf. mit berücksichtigt werden, da so etwas z.B. für den Benutzer inakzeptabel sein kann, wenn es sich um die Aufnahme einer Broadcast-Sendung handelt, in der dadurch ein Aussetzer entstehen würde.
- Der Mediator 1 ist nun dafür zuständig, entlang des angegebenen Migrationspfades die Applikationen 2, 2' zur Änderung ihrer Ressourcenbelegungen aufzufordern.

Folgende Änderungen an einer Anforderung kommen prinzipiell in Frage, um einen geeigneten Kompromiss zu finden:
- Zeitliche Verschiebung der gesamten Aktion oder von Teilen davon (insbesondere z.B. des noch verbleibenden Teiles ab Erscheinen einer konkurrierenden Anforderung).
- Verlangsamung, Absenkung der Datenrate, wobei die Verlängerung der Zeitdauer in Kauf genommen wird.
- Herabsetzung der Dienstgüte, z.B. der Videobandbreite.
- Wechsel auf eine andere Ressource, die für diese Anforderung ebenfalls geeignet ist (z.B. Ausweichen auf anderes Speichermedium oder anderen Netzwerkpfad).
- Umstrukturierung der Anwendung z.B. trotz der Anforderung auf ein transportables Speichermedium zu schreiben, zunächst Speicherung auf Festplatte und spätere Übertragung auf gewünschtes Medium.
- Änderung der Art der Datenquelle, z.B. Ausweichen auf Internet-Broadcast bei Konflikt um DVB-Tuner.
- Einschränkung der Anforderung an für den Benutzer unwichtigen Stellen (z.B. Verzicht auf die Aufnahme von Werbeblöcken und Pausen z.B. in einer Sportübertragung, Reduktion der Datenrate in "Anchorman"-Sequenzen von Nachrichtensendungen).
- Wechsel auf einen alternativen Content bzw. eine andere Applikation (z.B. wenn die Aufnahme vom Home Archive nicht abgespielt werden kann, da das Home Archive anderweitig ausgelastet ist, aber gerade live im Fernsehen die nächste Folge der gleichen Gameshow läuft, wird diese als Alternative angeboten).
- Kombinationen all dieser und weiterer Maßnahmen.

Um zu entscheiden, welche dieser Änderungen in Frage kommen, nutzt der Mediationsalgorithmus:
- Topologie- und Ressourceninformationen über das IHDN und dessen Anbindung an Zugangsnetzwerke (Quelle: Ressourcenverwaltung 3 /Datenbank 4);
- Informationen über Datenbestände im IHDN und Angebote von Service-Providern /Broadcastern (z.B. Fernsehprogramm) (Quelle: Datenbank 4);
- Sowohl explizit eingegebene als auch implizit deutlich gewordene Benutzer-Präferenzen (z.B. wenn mittels einer TiVo-ähnlichen Funktionalität die Vorlieben des Benutzers für bestimmte Schauspieler, Bands etc. festgestellt wurde; "TiVo" ist dabei die Bewertung von Fernsehsendungen mittels "Daumen hoch" /"Daumen runter" Tasten auf der Fernbedienung und Auswertung des Zusammenhangs zwischen dieser Bewertung und Meta-Informationen über Merkmale der Sendung wie Schauspieler, Thema etc., die vom Sender ausgestrahlt wird; diese Funktion kann auf andere Inhalte wie etwa Webseiten ausgedehnt werden und z.B. mit Verweildauer auf einer Webseite u.ä. als Bewertungskriterium kombiniert werden) (Quelle: Datenbank 4);
- Interaktion mit dem Benutzer, wobei diese nicht nur lokal, sondern ggf. auch durch Nachfragen über SMS o.ä. stattfinden kann
   (Quelle: Benutzerschnittstelle 6);
- Weitere Informationen über die Benutzer, z.B. Terminkalender
   (Quelle: Datenbank 4)
- Informationen über die derzeitige Benutzung von belegten Ressourcen
   (Quelle: andere Applikationen 2, 2');

Ein mögliches Verfahren zum Finden einer optimalen Konfliktlösung kann wie folgt verlaufen:
1. Es werden Operationen an den vorliegenden Datenflussgrafen definiert, mit denen sich ein Konflikt möglicherweise beheben lässt. Beispiele hierfür sind Ersetzen eines Knotens durch einen anderen (z.B. Ausweichen auf andere Ressource), Änderung von Parametern an einem Knoten (z.B. Dienstgüteabsenkung) oder am ganzen Graphen (z.B. Verschiebung auf späteren Zeitpunkt), oder auch das Einfügen zusätzlicher Teile in den Graphen (z.B. Zwischenspeicherung der Daten auf einem anderen Datenträger).
2. Es wird exakt identifiziert, welche Teile der Datenflussgrafen in Konflikt stehen, also z.B. zwei Anforderungen beziehen sich beide auf das Gerät X über das Zeitintervall Y.
3. Es werden aus den grundsätzlich möglichen Operationen solche ausgewählt, die einen Bezug zu diesem Konflikt haben.
4. Jede dieser Operationen wird in eine bestimmte Klasse eingeordnet, die beschreibt, wie die Chancen sind, mittels dieser Operation einen guten Kompromiss zu finden, ob noch eine Nachfrage beim Benutzer nötig werden wird, etc. So werden z.B. viele Operationen zu neuen Konflikten mit wieder anderen Anforderungen führen, die dann einer näheren Untersuchung bedürfen. In diesem Schritt werden nur die Informationen benutzt, die dem Algorithmus bereits vorliegen (das kann z.B. heißen, dass die Belegung einer für die Operation benötigten Ressource nicht bekannt ist, und daher die Operation in die Klasse "weitere Informationen nötig, konnte dann aber gute Lösung sein" eingeordnet wird).
5. Mittels einer vorgegebenen (evtl. vom Benutzerprofil abhängigen) Reihenfolge wird Klasse für Klasse von Lösungsansätzen näher untersucht, bis ein guter Vorschlag gefunden wird. Dazu wird nun innerhalb jeder Klasse ein Lösungsvorschlag nach dem anderen näher untersucht, indem z.B. auch weitere Informationen vom Mediator 1 angefordert werden. Aufgrund dieser Informationen ist dann entweder eine endgültige Bewertung möglich, oder der Lösungsvorschlag wandert in eine andere Klasse von Lösungen. Es werden solange Lösungsvorschläge aus der "höchsten besetzten" Klasse bearbeitet, bis ein Vorschlag in die Klasse "löst das Problem" gelangt.
6. Ggf. kann auch nach Finden eines akzeptablen Vorschlages noch weiter gesucht werden. Dies hängt z.B. davon ab, wie lange der Benutzer bereit ist, auf eine Lösung zu warten. Auch kann es sein, dass zunächst ein Kompromiss in die Tat umgesetzt wird, um dann "in Ruhe" nach der optimalen Lösung suchen zu können.

Das vorgestellte Verfahren berücksichtigt im Gegensatz zu bisherigen Ressourcenverwaltungsund Scheduling-Systemen die Tatsache, dass eine Ressourcen-Anforderung in einem IHDN nur eine ungenaue Abbildung des tatsächlichen (viel abstrakteren) Benutzerwunsches darstellt. Der eigentliche Wunsch der Benutzers kann z.B. darin bestehen, nach seiner Rückkehr am späten Abend umfassend über die Sportnachrichten informiert zu werden.
Daraus wird zunächst mittels der Benutzerschnittstelle 6 und einer entsprechenden Applikation 2' (und etlichen Zufällen und willkürlichen Entscheidungen seitens des Systems und des Benutzers) die Anforderung um 20:00 Uhr die Sportnachrichten von Kanal X auf die Festplatte des Gerätes A aufzunehmen. Diese Abbildung ist jedoch keineswegs eindeutig, und ihre Ungenauigkeit sollte bei Auftreten eines Konfliktes berücksichtigt werden. Denn der Benutzer ist u.U. ebenso zufrieden, wenn um 21:00 Uhr die Sportnachrichten von Kanal Y und um 21:30 Uhr die Sondersendung im Lokalsender über das Sportfest im Ort aufgenommen werden, und zwar nicht auf Gerät A, sondern auf Gerät B, wobei zur Reduktion der Gesamt-Datenmenge die Abschnitte, in denen nur der "Anchorman" zu sehen ist, mit einer deutlich verringerten Bildqualität gespeichert werden.

Die vorgestellte Erfindung ermöglicht ein System, das in der Lage ist, solche Alternativlösungen zu finden und zu nutzen.

Des weiteren besteht ein Vorteil des Systems darin, dass beim Auftreten eines Ressourcenkonflikts die "ältere" Applikation nicht prinzipiell bevorzugt wird. Typische bestehende Algorithmen zur Ressourcenverwaltung betrachten nur die Abänderung des neu hinzukommenden Requests zur Lösung eines Ressourcen-Engpasses. Der vorgestellte Ansatz betrachtet hingegen beim Auftreten eines Konflikts alle bestehenden und die neue Anforderung gleichermaßen, was die Lösungsmöglichkeiten erheblich erweitert und so zu besseren Ergebnissen führt.

Mögliche Erweiterungen des oben beschriebenen Verfahrens können wie folgt lauten:
- Der Mediator 1 kann aus gelösten Konflikten lernen. So können etwa Lösungs-Klassen, die in der Vergangsnheit gute Ergebnisse geliefert haben, höher bewertet werden, typische Konflikte können klassifiziert und mit einer "Musterlösung" versehen werden, etc.
- Der Mediator 1 kann mittels Aufbereitung der sich ergebenden Konflikte z.B. Hinweise geben, was für zusätzliche Hardware der Benutzer anschaffen sollte, wie er sein IHDN umkonfigurieren sollte, oder welchen zusätzlichen Dienst er bei einem Service-Provider abonnieren sollte.
- In TiVo-ähnlicher Funktionalität kann der Mediator 1 beliebige Applikationen von sich aus starten, um vermutete zukünftige Anforderungen vorwegzunehmen.
- Der Mediator 1 kann vorsorglich versuchen, Konflikte zu erahnen und zu vermeiden bzw. notwendige Zusatzinformationen einzuholen (z.B. durch die Benutzerabfrage "Zu der Zeit, zu der Du diese Sendung aufnehmen willst, läuft ein Fußballspiel mit X's Lieblingsteam - das will er bestimmt sehen. Ist es o.k., wenn ich die Wiederholung Deiner Sendung am nächsten Tag aufnehme?") Hierzu kann der Mediator 1 selbständig den Algorithmus 5 aufrufen, um z.B. eine begehrte Ressource vorsorglich freizuhalten, wenn es geht. Hierzu übergibt der Mediator 1 dem Algorithmus 5 den Datenflussgrafen der betroffenen Applikation sowie einen künstlichen Datenflussgrafen, der nur aus einer Anforderung auf die begehrte Ressource besteht, sowie die Information, dass an diesem Graphen keinerlei Änderung in Frage kommt.
- Der Mediator 1 übernimmt die Rolle des "Sündenbocks", indem er z.B. dem bei Auftreten des Konflikts abwesenden Benutzer einen "Entschuldigungs-Zettel" an die in niedriger Dienstgüte erfolgte Aufnahme "klebt", sich merkt, wer unzufrieden mit seinen Entscheidungen war, um nächstes Mal mehr Rücksicht zu nehmen, etc.

## Patentansprüche

1. Verfahren zur Behandlung von Nutzungskonflikten in digitalen Netzwerken, vorzugsweise in digitalen Hausnetzwerken, wobei eine von einer ersten Applikation aufgrund einer ersten Zielvorgabe belegte Ressource von einer zweiten Applikation aufgrund einer zweiten Zielvorgabe angefordert wird,
**dadurch gekennzeichnet,**
**dass** Änderungen der Anforderungen der Ressource durch die erste Applikation und/oder durch die zweite Applikation gesucht werden, welche das Erreichen der ersten Zielvorgabe und der zweiten Zielvorgabe erlauben.

2. Verfahren nach Anspruch 1,
**dadurch gekennzeichnet,**
**dass** die Änderung einer Anforderung der Ressource besteht in
- einer vollständigen oder teilweisen zeitlichen Verschiebung der Anforderung;
- einer Veränderung der Zugriffsparameter, insbesondere der Bandbreite und/oder der Datenrate des Zugriffs;
- einem Wechsel auf eine andere, gleichwertige Ressource;
- einem Wechsel auf eine als Zwischenstation dienende Ressource.

3. Verfahren nach Anspruch 1 oder 2,
**dadurch gekennzeichnet,**
**dass** die Zielvorgaben durch einen Datenflussgraphen repräsentiert werden, welcher vorzugsweise Informationen über die angeforderten Daten und das gewünschte Ziel dieser Daten enthält.

4. Verfahren nach mindestens einem der Ansprüche 1 bis 3,
**dadurch gekennzeichnet,**
**dass** bei der Suche nach Änderungen der Anforderungen bekannte und/oder durch Adaption gelernte Benutzerprofile verwendet werden, die insbesondere Informationen über den Terminkalender des Benutzers und/oder Präferenzen des Benutzers für bestimmte im Netzwerk verfügbare Dienste enthalten.

5. Verfahren nach mindestens einem der Ansprüche 1 bis 4,
**dadurch gekennzeichnet,**
**dass** von einem Benutzer zusätzliche Informationen und/oder die Zustimmung oder Ablehnung zu gefundenen Änderungen erfragt werden.

6. Verfahren nach mindestens einem der Ansprüche 1 bis 5,
**dadurch gekennzeichnet,**
**dass** zusätzlich eine Reihenfolge für die Durchführung von gefundenen Änderungen ermittelt wird.

7. Verfahren nach mindestens einem der Ansprüche 1 bis 6,
**dadurch gekennzeichnet,**
**dass** eine Änderung mindestens einer Zielvorgabe vorgeschlagen wird, wenn keine Änderungen der Anforderungen bei gleichbleibenden Zielvorgaben gefunden werden.

8. Verfahren nach mindestens einem der Ansprüche 1 bis 7,
**dadurch gekennzeichnet,**
**dass** Vorschläge für eine Änderung des Netzwerkes und/oder seiner Ressourcen erstellt werden, um zukünftige Nutzungskonflikte zu minimieren.

9. Verfahren nach mindestens einem der Ansprüche 1 bis 8,
**dadurch gekennzeichnet,**
**dass** die Anforderung der zweiten Applikation nur eine vorhergesagte Anforderung ist.

10. Digitales Netzwerk, insbesondere Hausnetzwerk, enthaltend
- mindestens eine Datenverarbeitungseinheit, auf welcher eine Implementation von Applikationen (2, 2'), einer Ressourcenverwaltung (3), und eines Mediatormoduls (1, 5) abläuft;
- eine Datenbank (4), welche mit der Datenverarbeitungseinheit gekoppelt ist;
- mindestens eine Benutzerschnittstelle (6), welche mit der Datenverarbeitungseinheit gekoppelt ist;
wobei das Mediatormodul so eingerichtet ist, dass es ein Verfahren nach mindestens einem der Ansprüche 1 bis 9 ausführen kann.
